# EUROPEAN PATENT APPLICATION

(11) **EP 4 614 764 A1**
(43) Date of publication of application: **10.09.2025**
(21) Application number: 23885366.7
(22) Date of filing: 04.09.2023
(51) Int. Cl.: H02J 50/12, B60L 3/00, B60L 5/00, B60L 53/12, B60M 7/00, H02J 7/00, H02J 50/40, H02J 50/80

(54) **ABNORMALITY DIAGNOSIS METHOD**

(30) Priority: 01.11.2022 JP 2022175469
(71) Applicant: TOYOTA JIDOSHA KABUSHIKI KAISHA, Toyota-shi, Aichi 471-8571 (JP); DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); YAMAGUCHI, Nobuhisa, Kariya-shi, Aichi 448-8661 (JP); KANESAKI, Masaki, Kariya-shi, Aichi 448-8661 (JP); TANI, Keisuke, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: D Young & Co LLP
(86) International application number: PCT/JP2023/032212
(87) International publication number: WO 2024/095600

(57) **Abstract**

An abnormality diagnosis method for diagnosing an abnormality of a ground power supply device 2 that transmits electrical power to a vehicle 3 in a wireless manner includes: performing a power supply operation under a plurality of different power supply conditions when the vehicle is located on a power transmission coil 44 of the ground power supply device; and diagnosing an abnormality of the ground power supply device based on a value of a parameter related to power supply detected while the power supply operation is performed under the plurality of different power supply conditions.

## Description

### Technical Field

The present disclosure relates to an abnormality diagnosis method for a ground power supply device.

### Background Art

There is known a ground power supply device in which a plurality of power transmission coils for transmitting power to a vehicle in a wireless manner are arranged along a lane and the power is transmitted to the traveling vehicle (JP 2019-526219 T).

### Summary of Invention

Since an abnormality may occur in the ground power supply device, it is necessary to diagnose the abnormality of the ground power supply device. However, when abnormality diagnosis is performed based only on detection results of values of various parameters in a case where power is supplied under one power supply condition, there is a possibility that the abnormality cannot always be accurately diagnosed.

In view of the above problems, an object of the present disclosure is to enable more accurate diagnosis of abnormality of a ground power supply device.

The gist of the present disclosure is as follows:

(1) An abnormality diagnosis method for diagnosing an abnormality of a ground power supply device that transmits electrical power to a vehicle in a wireless manner, the abnormality diagnosis method comprising:
   performing a power supply operation under a plurality of different power supply conditions when the vehicle is located on a power transmission coil of the ground power supply device; and
   diagnosing an abnormality of the ground power supply device based on a value of a parameter related to power supply detected while the power supply operation is performed under the plurality of different power supply conditions.
(2) The abnormality diagnosis method according to claim 1, wherein the power supply operation under the plurality of different power supply conditions is performed when the vehicle is traveling and passes over the power transmission coil.
(3) The abnormality diagnosis method according to claim 1 or 2, wherein at least one of the plurality of different power supply conditions is a power supply condition in which an abnormality occurs in power supply.
(4) The abnormality diagnosis method according to any one of claims 1 to 3, wherein at least one of the plurality of different power supply conditions is a power supply condition in which power supply is performed normally.
(5) The abnormality diagnosis method according to any one of claims 1 to 4, wherein
   the vehicle includes a plurality of power reception coils capable of receiving electrical power under different power supply conditions,
   the power reception coils are arranged in the vehicle so as to be spaced apart from each other in a traveling direction of the vehicle, and
   the power supply operation is performed under a different power supply condition for each of the power reception coils by the power reception coil being sequentially located on the power transmission coil when the vehicle passes over the power transmission coil.
(6) The abnormality diagnosis method according to any one of claims 1 to 4, wherein
   the vehicle includes a power reception coil that can move with respect to the vehicle in such a way that the power supply condition changes, and
   the power supply operation is performed under a different power supply condition by the power reception coil moving when the vehicle is located on the power transmission coil.
(7) The abnormality diagnosis method according to any one of claims 1 to 6, wherein in the diagnosis of an abnormality of the ground power supply device, it is determined that the ground power supply device is normal when the value of the parameter related to the power supply detected is a value within a normal range corresponding to each power supply condition, and it is determined that an abnormality has occurred in the ground power supply device when the value of the parameter related to the power supply detected is a value outside the normal range corresponding to each power supply condition.
(8) The abnormality diagnosis method according to any one of claims 1 to 7, wherein the plurality of different power supply conditions include a plurality of power supply conditions in which positions of power reception coils of the vehicle are shifted from each other in a lateral direction with respect to the traveling direction of the vehicle.
(9) The abnormality diagnosis method according to any one of claims 1 to 8, wherein the plurality of different power supply conditions include a plurality of power supply conditions in which positions of power reception coils of the vehicle are shifted from each other in a direction perpendicular to a ground on which the vehicle travels.
(10) The abnormality diagnosis method according to any one of claims 1 to 9, wherein the plurality of different power supply conditions include a plurality of power supply conditions in which different command values related to power supply are transmitted from the vehicle to the ground power supply device.
(11) The abnormality diagnosis method according to any one of claims 1 to 10,
   wherein the plurality of different power supply conditions include a power supply condition in which a foreign substance is disposed between the vehicle and the ground power supply device, and a power supply condition in which no foreign substance is disposed between the vehicle and the ground power supply device.
(12) An abnormality diagnosis device that diagnoses an abnormality of a ground power supply device that transmits electrical power to a vehicle in a wireless manner, the abnormality diagnosis device comprising:
   a power reception device configured to perform a power supply operation under a plurality of different power supply conditions when the vehicle is located on a power transmission coil of the ground power supply device; and
   a diagnosis unit that diagnoses an abnormality of the ground power supply device based on a value of a parameter related to power supply detected while the power supply operation is performed under the plurality of different power supply conditions.
(13) An abnormality diagnosis device that diagnoses an abnormality of a ground power supply device that transmits electrical power to a vehicle in a wireless manner, the abnormality diagnosis device being configured to:
   transmitting a signal to the ground power supply device in such a way that a power supply operation is performed under a plurality of different power supply conditions when the vehicle is located on a power transmission coil of the ground power supply device, and
   diagnosing an abnormality of the ground power supply device based on a value of a parameter related to power supply detected while the power supply operation is performed under the plurality of different power supply conditions.
(14) The abnormality diagnosis device according to claim 12 or 13, wherein the power supply operation under the plurality of different power supply conditions is performed when the vehicle is traveling and passes over the power transmission coil.
(15) A vehicle comprising the abnormality diagnosis device according to any one of claims 12 to 14.

### Brief Description of Drawings

Fig. 1 is a diagram schematically illustrating a configuration of a wireless power supply system.
Fig. 2 is a schematic configuration diagram of a controller and a device connected to the controller.
Fig. 3 is a schematic configuration diagram of a ground-side controller and a device connected to the ground-side controller.
Fig. 4 is a diagram illustrating an example of an arrangement of a magnetic field detector provided on a road.
Fig. 5 is a schematic configuration diagram of a vehicle-side controller and a device connected to the vehicle-side controller.
Fig. 6 is a sequence diagram schematically illustrating a flow of a power supply operation in the wireless power supply system.
Fig. 7 is a bottom view schematically illustrating a bottom surface of a diagnosis vehicle.
Fig. 8 is a flowchart illustrating a flow of an abnormality diagnosis process performed in the vehicle-side controller.
Fig. 9 is a diagram schematically illustrating a configuration of a diagnosis vehicle according to a second embodiment.
Fig. 10 is a bottom view similar to Fig. 7 schematically illustrating the bottom surface of the diagnosis vehicle.
Fig. 11 is a diagram schematically illustrating a configuration of a diagnosis vehicle according to a fourth embodiment.
Fig. 12 is a diagram schematically illustrating a configuration of a diagnosis vehicle according to a fifth embodiment.

### Description of Embodiments

Hereinafter, embodiments will be described in detail with reference to the drawings. In the following description, similar components are denoted by the same reference numerals.

### First Embodiment

### <Overall configuration of wireless power supply system>

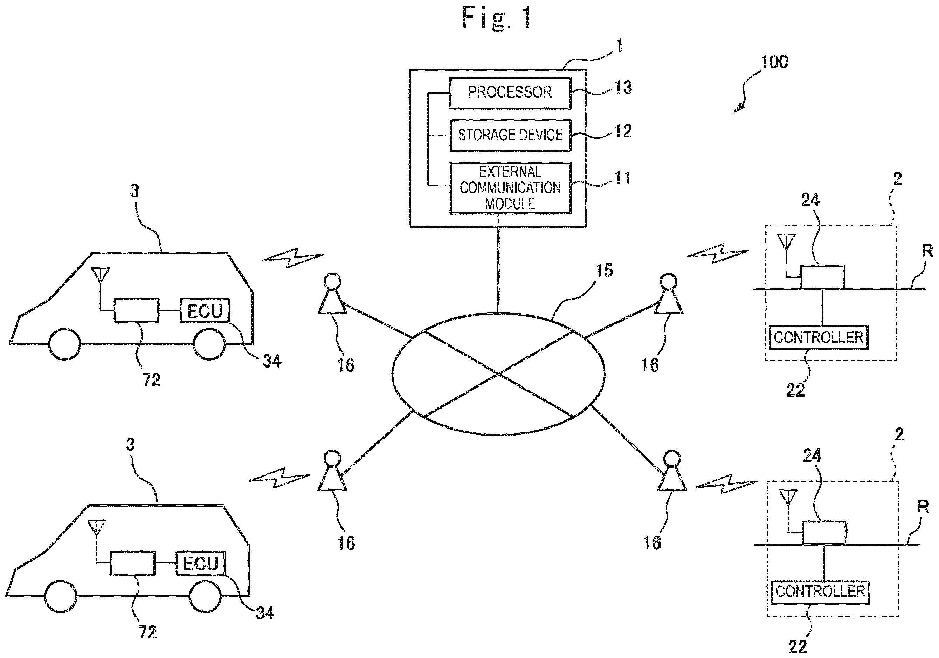

First, an overall configuration of a wireless power supply system 100 will be described with reference to Fig. 1. Fig. 1 is a diagram schematically illustrating the overall configuration of the wireless power supply system 100. As illustrated in Fig. 1, the wireless power supply system 100 includes a server 1, a ground power supply device 2 provided on a road R, and a vehicle 3 traveling on the road R, and is configured to be capable of performing wireless power transmission from the ground power supply device 2 to the vehicle 3 by magnetic field resonance coupling (magnetic field resonance). The wireless power transmission is performed while the vehicle 3 is traveling, parked, or stopped. The server 1 is configured to be able to communicate with the ground power supply device 2 and the vehicle 3.

The term "traveling" means a state where the vehicle 3 is located on the road for traveling. Therefore, the term "traveling" includes not only a state where the vehicle 3 is actually running at any speed greater than zero, but also a state where the vehicle 3 is stopped on the road, for example, by waiting for a traffic light.

### <Configuration of server>

A configuration of the server 1 will be described with reference to Fig. 1. As illustrated in Fig. 1, the server 1 includes an external communication module 11, a storage device 12, and a processor 13. In addition, the server 1 may include an input device such as a keyboard and a mouse, and an output device such as a display.

The external communication module 11 communicates with a device (the ground power supply device 2, the vehicle 3, etc.) outside the server 1. The external communication module 11 includes an interface circuit for connecting the server 1 to a communication network 15. The external communication module 11 is configured to be able to communicate with each of a plurality of the ground power supply devices 2 and a plurality of the vehicles 3 via the communication network 15 and a wireless base station 16. In particular, the external communication module 11 is configured to be able to communicate with a ground-side communication device 26 of the ground power supply device 2 and a vehicle-side communication device 38 of the vehicle 3. As the radio communication between the wireless base station 16 and the ground power supply device 2 and the vehicle 3, for example, wide-area wireless communication is used. The wide-area wireless communication is communication having a longer communication distance than narrow-area wireless communication, and specifically is, for example, communication having a communication distance of from 10 meters to 10 kilometers. As the wide-area wireless communication, various types of wireless communication having a long communication distance can be used, and for example, communication conforming to an arbitrary communication standard such as 3GPP (registered tradename), 4G formulated by IEEE, LTE, 5G, and WiMAX is used.

The storage device 12 includes a storage medium such as a volatile semiconductor memory (for example, RAM), a nonvolatile semiconductor memory (for example, ROM), a hard disk drive (HDD), a solid state drive (SSD), or an optical recording medium. The storage device 12 stores a computer program for executing various processes by the processor 13 and various data used when various processes are executed by the processor 13.

The processor 13 includes one or a plurality of CPUs and a peripheral circuit thereof. The processor 13 may further include a GPU or an operation circuit such as a logic operating unit or an arithmetic logic unit. The processor 13 executes various arithmetic processes based on a computer program stored in the storage device 12 of the server 1.

### <Configuration of ground power supply device>

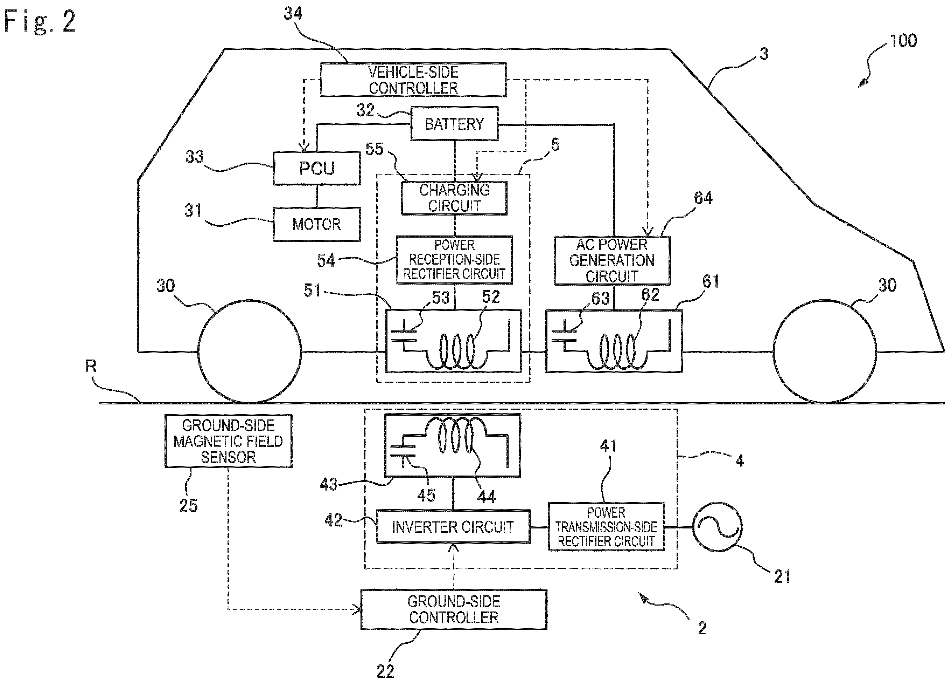

Next, a configuration of the ground power supply device 2 will be described with reference to Fig. 2. Fig. 2 is a diagram schematically illustrating a configuration of the ground power supply device 2 and the vehicle 3. As illustrated in Fig. 2, the ground power supply device 2 includes a power transmission device 4, a power supply 21, and a ground-side controller 22. The power supply 21 and the ground-side controller 22 may be embedded in the road R, or may be arranged in a place (including the ground) different from the inside of the road R.

The power supply 21 supplies power to the power transmission device 4. The power supply 21 is, for example, a commercial AC power supply that supplies single-layer AC power. The power supply 21 may be another AC power supply that supplies three-phase AC power, or may be a DC power supply such as a fuel cell.

The power transmission device 4 transmits the power supplied from the power supply 21 to the vehicle 3 in a wireless manner. The power transmission device 4 includes a power transmission-side rectifier circuit 41, an inverter circuit 42, and a power transmission-side resonance circuit 43. As illustrated in Fig. 2, the power transmission-side resonance circuit 43 of the power transmission device 4, particularly, a power transmission coil 44 of the power transmission-side resonance circuit 43, is embedded in the road R (underground) on which the vehicle 3 travels, for example, at the center of a lane on which the vehicle 3 travels. The power transmission-side rectifier circuit 41 and the inverter circuit 42 of the power transmission device 4 may be embedded underground or may be disposed on the ground.

The power transmission-side rectifier circuit 41 is electrically connected to the power supply 21 and the inverter circuit 42. The power transmission-side rectifier circuit 41 rectifies an AC power supplied from the power supply 21 to convert the AC power into a DC power, and supplies the DC power to the inverter circuit 42. The power transmission-side rectifier circuit 41 is, for example, an AC/DC converter. When the power supply 21 is the DC power supply, the power transmission-side rectifier circuit 41 may be omitted.

The inverter circuit 42 is electrically connected to the power transmission-side rectifier circuit 41 and the power transmission-side resonance circuit 43. The inverter circuit 42 converts the DC power supplied from the power transmission-side rectifier circuit 41 into the AC power (high-frequency power) having a higher frequency than that of the AC power of the power supply 21, and supplies the high-frequency power to the power transmission-side resonance circuit 43.

The power transmission-side resonance circuit 43 includes a resonator including the power transmission coil 44 and a power transmission-side capacitor 45. Various parameters (the outer diameter and inner diameter of the power transmission coil 44, the number of turns of the power transmission coil 44, electrostatic capacitance of the power transmission-side capacitor 45, and the like) of the power transmission coil 44 and the power transmission-side capacitor 45 are determined such that a resonance frequency of the power transmission-side resonance circuit 43 becomes a predetermined set value. The predetermined set value is, for example, from 10 kHz to 100 GHz, and is preferably 85 kHz defined by the SAE TIR J2954 standard as a frequency band for wireless power transmission.

The power transmission coil 44 of the power transmission-side resonance circuit 43 is disposed such that the center thereof is located at the center of the lane. When the high-frequency power supplied from the inverter circuit 42 is applied to the power transmission-side resonance circuit 43, the power transmission-side resonance circuit 43 generates an alternating magnetic field for power transmission.

The ground-side controller 22 is, for example, a general-purpose computer, and performs various controls of the ground power supply device 2. For example, the ground-side controller 22 is electrically connected to the inverter circuit 42 of the power transmission device 4, and controls the inverter circuit 42 to control power transmission by the power transmission device 4. In addition, the ground-side controller 22 controls the ground-side communication device 26 to be described later.

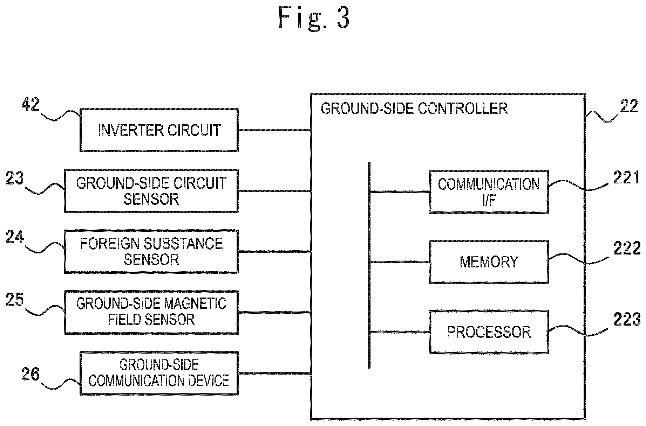

Fig. 3 is a schematic configuration diagram of the ground-side controller 22 and a device connected to the ground-side controller 22. The ground-side controller 22 includes a communication interface 221, a memory 222, and a processor 223. The communication interface 221, the memory 222, and the processor 223 are connected to each other via a signal line.

The communication interface 221 includes an interface circuit for connecting the ground-side controller 22 to various devices (for example, the inverter circuit 42, various sensors 23 to 25 to be described later, the ground-side communication device 26, and the like) constituting the ground power supply device 2. The ground-side controller 22 communicates with other devices via the communication interface 221.

The memory 222 includes, for example, a volatile semiconductor memory (for example, RAM), a nonvolatile semiconductor memory (for example, ROM), and the like. The memory 222 stores a computer program for executing various processes in the processor 223, various data used when various processes are executed by the processor 223, and the like.

The processor 223 includes one or a plurality of CPUs (Central Processing Units) and a peripheral circuit thereof. The processor 223 may further include an operation circuit such as a logic operating unit or an arithmetic logic unit. The processor 223 executes various processes based on the computer program stored in the memory 222.

As illustrated in Fig. 3, the ground power supply device 2 further includes a ground-side circuit sensor 23, a foreign substance sensor 24, a ground-side magnetic field sensor 25, and a ground-side communication device 26.

The ground-side circuit sensor 23 is an example of a detector that detects a state of the power transmission device 4 of the ground power supply device 2, particularly, a state of a circuit included in the power transmission device 4. In the present embodiment, the ground-side circuit sensor 23 includes, for example, a current sensor that detects a current flowing through various circuits (in particular, the power transmission-side resonance circuit 43, the inverter circuit 42, and the power transmission-side rectifier circuit 41) of the power transmission device 4, a power transmission device voltage sensor that detects a voltage applied to various circuits of the power transmission device 4, a temperature sensor that detects temperatures of various devices of the power transmission device 4, and the like. The output of the ground-side circuit sensor 23 is input to the ground-side controller 22.

The foreign substance sensor 24 is an example of a detector that detects the presence or absence of a foreign substance on the road in which the power transmission coil 44 of the power transmission device 4 is embedded, particularly on each of the power transmission coils 44. Examples of the foreign substance include a metal and a living body. The output of the foreign substance sensor 24 is input to the ground-side controller 22.

The ground-side magnetic field sensor 25 is an example of a detector that detects surrounding magnetic field intensity. The ground-side magnetic field sensor 25 is, for example, a magneto-impedance (MI) sensor, a Hall sensor, a magneto resistive (MR) sensor, or the like. In the present embodiment, the ground-side magnetic field sensor 25 is used to detect the presence or absence of a positional deviation of a power reception device 5 with respect to the power transmission device 4 in a direction (hereinafter referred to as the "lateral direction") perpendicular to a traveling direction of the vehicle 3, particularly a positional deviation of the power reception coil 52 with respect to the power transmission coil 44 (hereinafter referred to as the "lateral deviation").

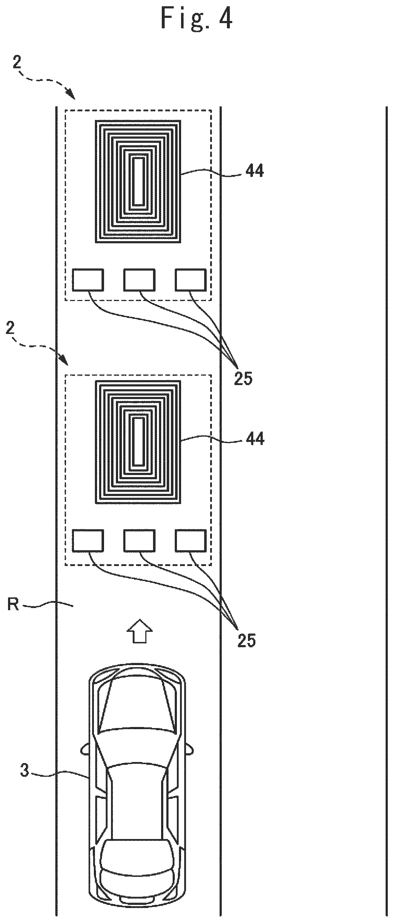

Fig. 4 is a diagram illustrating an example of an arrangement of the ground-side magnetic field sensor 25 provided on the road R. As illustrated in Fig. 4, the ground-side magnetic field sensor 25 is disposed in front of the power transmission-side resonance circuit 43 of the power transmission device 4 in the traveling direction of the vehicle 3 on the road on which the power transmission device 4 is provided. Further, a plurality of the ground-side magnetic field sensors are arranged side by side in a direction perpendicular to the traveling direction of the vehicle 3. Furthermore, the ground-side magnetic field sensor 25 is disposed underground (below the road surface) or above the road surface. When the alternating magnetic field for lateral deviation detection is generated from the vehicle 3 around the ground-side magnetic field sensor 25, the ground-side magnetic field sensor 25 detects the alternating magnetic field for positional deviation detection.

The ground-side magnetic field sensor 25 is electrically connected to the ground-side controller 22, and the output of the ground-side magnetic field sensor 25 is transmitted to the ground-side controller 22. Therefore, in the present embodiment, the output from the ground-side magnetic field sensor 25 is input to the ground-side controller 22, and the ground-side controller 22 detects the presence or absence of the lateral deviation between the power reception coil 52 and the power transmission coil 44 based on the output. In particular, the alternating magnetic field generated by an alternating magnetic field generation circuit 61 provided in the vehicle 3 is detected by the ground-side magnetic field sensor 25, and the ground-side controller 22 detects the lateral deviation based on the magnetic field intensity detected in this manner.

Here, when the lateral deviation between the power reception coil 52 and the power transmission coil 44 is small, that is, when the vehicle 3 is traveling near the center of the lane, the intensity of the magnetic field detected by the ground-side magnetic field sensor 25 disposed at the center of the lane becomes the strongest. On the other hand, when the lateral deviation between the power reception coil 52 and the power transmission coil 44 is large, that is, when the vehicle 3 is traveling while being shifted from the center of the lane, the intensity of the magnetic field detected by the ground-side magnetic field sensor 25 disposed far from the center of the lane becomes the strongest. Therefore, the ground-side controller 22 can detect the presence or absence of the lateral deviation between the power reception coil 52 and the power transmission coil 44 by comparing the magnetic field intensities detected by a plurality of the ground-side magnetic field sensors 25.

In the present embodiment, the presence or absence of the lateral deviation is detected using the alternating magnetic field generated by the alternating magnetic field generation circuit 61. However, the lateral deviation may be detected using other than the magnetic field, and for example, the lateral deviation may be detected by sonar or the like using ultrasonic waves. In the present embodiment, a lateral deviation detection device detects the presence or absence of the lateral deviation, however, a lateral deviation detection device may detect a lateral deviation amount of the vehicle 3 from the center of the lane. In this case, when the lateral deviation amount detected by the lateral deviation detection device is greater than or equal to a predetermined reference value, the lateral deviation detection device determines that the lateral deviation occurs.

As described above, the ground-side communication device 26 is configured to be able to communicate with the server 1 using the wide-area wireless communication. In addition, the ground-side communication device 26 may be configured to be able to communicate with the vehicle 3 by using the wide-area wireless communication and the narrow-area wireless communication. The narrow-area wireless communication is communication having a shorter communication distance than wide-area wireless communication, and specifically is, for example, communication having a communication distance of less than 10 meters. As the narrow-area wireless communication, various types of short-range wireless communication having a short communication distance can be used, and for example, communication conforming to an arbitrary communication standard (for example, Bluetooth (registered tradename) and ZigBee (registered tradename)) formulated by IEEE, ISO, IEC, or the like is used. As a technology for performing narrow-area wireless communication, for example, RFID (Radio Frequency Identification), DSRC (Dedicated Short Range Communication), and the like are used.

### <Configuration of vehicle>

On the other hand, as illustrated in Fig. 2, the vehicle 3 includes the power reception device 5, a motor 31, a battery 32, a power control unit (PCU) 33, and a vehicle-side controller 34. In the present embodiment, the vehicle 3 is an electric vehicle (BEV) in which the motor 31 drives the vehicle 3. However, the vehicle 3 may be a hybrid vehicle (HEV) in which an internal combustion engine drives the vehicle 3 in addition to the motor 31.

The motor 31 is, for example, an AC synchronous motor, and functions as an electric motor and a generator. The motor 31 is driven using the power stored in the battery 32 as a power source. The output of the motor 31 is transmitted to the wheel 30 via a reduction gear and an axle.

The battery 32 is a rechargeable secondary battery, and includes, for example, a lithium ion battery, a nickel hydrogen battery, and the like. The battery 32 stores the power (for example, driving electric power of the motor 31) necessary for traveling of the vehicle 3. When the power received by the power reception device 5 is supplied from the power transmission device 4, the battery 32 is charged. When the battery 32 is charged, a state of charge (SOC) of the battery 32 is recovered. The battery 32 may also be chargeable by an external power supply other than the ground power supply device 2 via a charging port provided in the vehicle 3.

The PCU 33 is electrically connected to the battery 32 and the motor 31. The PCU 33 includes an inverter, a boost converter, and a DC/DC converter. The inverter converts the DC power supplied from the battery 32 into the AC power, and supplies the AC power to the motor 31. The boost converter boosts the voltage of the battery 32 as necessary when the power stored in the battery 32 is supplied to the motor 31. The DC/DC converter steps down the voltage of the battery 32 when the power stored in the battery 32 is supplied to an electronic device such as a headlight.

The power reception device 5 receives the power from the power transmission device 4 and supplies the received power to the battery 32. The power reception device 5 includes a power reception-side resonance circuit 51, a power reception-side rectifier circuit 54, and a charging circuit 55.

The power reception-side resonance circuit 51 is disposed at a bottom of the vehicle 3 so that a distance from the road surface decreases. In the present embodiment, the power reception-side resonance circuit 51 is disposed at the center of the vehicle 3 in the lateral direction. The power reception-side resonance circuit 51 has a configuration similar to that of the power transmission-side resonance circuit 43, and includes a resonator including the power reception coil 52 and a power reception-side capacitor 53. Various parameters (the outer diameter and inner diameter of the power reception coil 52, the number of turns of the power reception coil 52, the electrostatic capacitance of the power reception-side capacitor 53, and the like) of the power reception coil 52 and the power reception-side capacitor 53 are determined such that the resonance frequency of the power reception-side resonance circuit 51 matches the resonance frequency of the power transmission-side resonance circuit 43. When a deviation amount between the resonance frequency of the power reception-side resonance circuit 51 and the resonance frequency of the power transmission-side resonance circuit 43 is small, for example, when the resonance frequency of the power reception-side resonance circuit 51 is within a range of ±20% of the resonance frequency of the power transmission-side resonance circuit 43, the resonance frequency of the power reception-side resonance circuit 51 does not necessarily coincide with the resonance frequency of the power transmission-side resonance circuit 43.

As illustrated in Fig. 2, when the alternating magnetic field is generated by the power transmission-side resonance circuit 43 while the power reception coil 52 faces the power transmission coil 44, vibration of the alternating magnetic field is transmitted to the power reception-side resonance circuit 51 that resonates at the same resonance frequency as that of the power transmission-side resonance circuit 43. As a result, an induced current flows in the power reception-side resonance circuit 51 by electromagnetic induction, and an induced electromotive force is generated in the power reception-side resonance circuit 51 by the induced current.

The power reception-side rectifier circuit 54 is electrically connected to the power reception-side resonance circuit 51 and the charging circuit 55. The power reception-side rectifier circuit 54 rectifies the AC power supplied from the power reception-side resonance circuit 51 to convert the AC power into the DC power, and supplies the DC power to the charging circuit 55. The power reception-side rectifier circuit 54 is, for example, an AC/DC converter.

The charging circuit 55 is electrically connected to the power reception-side rectifier circuit 54 and the battery 32. The charging circuit 55 converts the DC power supplied from the power reception-side rectifier circuit 54 into a voltage level of the battery 32, and supplies the DC power to the battery 32. When the power transmitted from the power transmission device 4 is supplied to the battery 32 by the power reception device 5, the battery 32 is charged. The charging circuit 55 is, for example, a DC/DC converter. The charging circuit 55 switches on and off of connection between the power reception-side rectifier circuit 54 and the battery 32 according to a command from the vehicle-side controller 34.

The vehicle-side controller 34 performs various controls of the vehicle 3. For example, the vehicle-side controller 34 is electrically connected to the charging circuit 55 of the power reception device 5, and controls the charging circuit 55 to control charging of the battery 32 by the power transmitted from the power transmission device 4. Further, the vehicle-side controller 34 is electrically connected to the PCU 33, and controls the PCU 33 to control exchange of power between the battery 32 and the motor 31. Furthermore, the vehicle-side controller 34 controls the vehicle-side communication device 38.

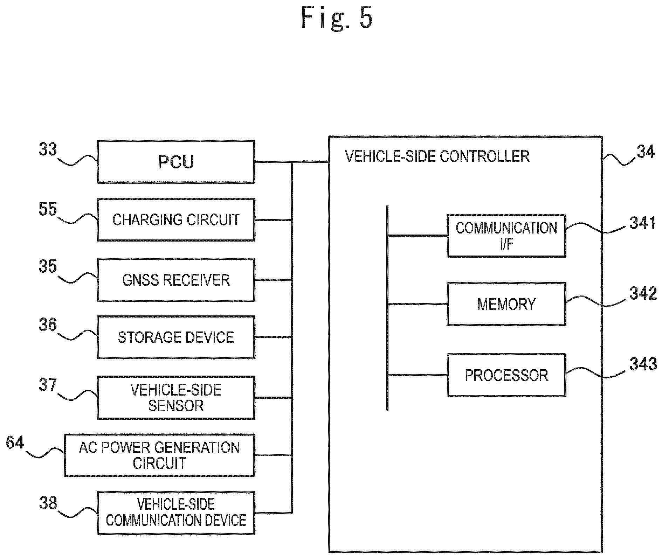

Fig. 5 is a schematic configuration diagram of the vehicle-side controller 34 and a device connected to the vehicle-side controller 34. The vehicle-side controller 34 includes a communication interface 341, a memory 342, and a processor 343. The communication interface 341, the memory 342, and the processor 343 are connected to each other via a signal line.

The communication interface 341 includes an interface circuit for connecting the vehicle-side controller 34 to an in-vehicle network conforming to a standard such as a CAN (Controller Area Network). The vehicle-side controller 34 communicates with other devices via the communication interface 341.

The memory 342 includes, for example, a volatile semiconductor memory (for example, RAM) and a nonvolatile semiconductor memory (for example, ROM). The memory 342 stores a computer program for executing various processes in the processor 343, various data used when various processes are executed by the processor 343, and the like.

The processor 343 includes one or a plurality of CPUs (Central Processing Units) and a peripheral circuit thereof. The processor 343 may further include an operation circuit such as a logic operating unit or an arithmetic logic unit. The processor 343 executes various processes based on the computer program stored in the memory 342.

As illustrated in Figs. 1 and 5, the vehicle 3 further includes a GNSS receiver 35, a storage device 36, a plurality of vehicle-side sensors 37, an alternating magnetic field generation circuit 61, an AC power generation circuit 64, and a vehicle-side communication device 38. The GNSS receiver 35, the storage device 36, the vehicle-side sensor 37, the AC power generation circuit 64, and the vehicle-side communication device 38 are electrically connected to the vehicle-side controller 34 via the in-vehicle network.

The GNSS receiver 35 detects a current position of the vehicle 3 (for example, the latitude and longitude of the vehicle 3) based on positioning information obtained from a plurality of (for example, three or more) positioning satellites. The output of the GNSS receiver 35, that is, the current position of the vehicle 3 detected by the GNSS receiver 35, is transmitted to the vehicle-side controller 34. As the GNSS receiver 35, for example, a GPS receiver is used.

The storage device 36 stores data. The storage device 36 includes, for example, a hard disk drive (HDD), a solid state drive (SSD), or an optical recording medium. In the present embodiment, the storage device 36 stores map information. The map information includes information such as installation position information of the ground power supply device 2 and position information of a check point corresponding to the ground power supply device 2 in addition to information regarding the road. The vehicle-side controller 34 acquires the map information from the storage device 36.

The vehicle-side sensor 37 detects a state of the vehicle 3. In the present embodiment, the vehicle-side sensor 37 includes, as sensors that detect the state of the vehicle 3, a speed sensor that detects the speed of the vehicle 3, a battery temperature sensor that detects the temperature of the battery 32, a power reception device temperature sensor that detects the temperatures of various devices (in particular, the power reception-side resonance circuit 51 and the power reception-side rectifier circuit 54) of the power reception device 5, a battery current sensor that detects a charge current value and a discharge current value of the battery 32, a power reception device current sensor that detects a current flowing through various devices of the power reception device 5, and a power reception device voltage sensor that detects a voltage applied to various devices of the power reception device 5. The output of the vehicle-side sensor 37 is input to the vehicle-side controller 34.

The alternating magnetic field generation circuit 61 is used to detect the lateral deviation of the power reception device 5 with respect to the power transmission device 4. In particular, the alternating magnetic field generation circuit 61 generates an alternating magnetic field detected by the ground-side magnetic field sensor 25. The alternating magnetic field generation circuit 61 is disposed at the bottom of the vehicle 3 so that the distance from the road surface decreases. In the present embodiment, the alternating magnetic field generation circuit 61 is disposed at the center of the vehicle 3 in the lateral direction.

The alternating magnetic field generation circuit 61 has a configuration similar to that of the power transmission-side resonance circuit 43, and includes a resonator including a magnetic field generation coil 62 and a capacitor 63 for magnetic field generation. Various parameters of the magnetic field generation coil 62 and the capacitor 63 for magnetic field generation are determined such that the resonance frequency of the alternating magnetic field generation circuit 61 becomes a predetermined set value. The predetermined set value is set to a value different from the resonance frequency of the power transmission-side resonance circuit 43.

The AC power generation circuit 64 is electrically connected to the battery 32 and the alternating magnetic field generation circuit 61. The AC power generation circuit 64 generates AC power and supplies the AC power to the alternating magnetic field generation circuit 61. The AC power generation circuit 64 supplies the AC power to the alternating magnetic field generation circuit 61 in accordance with a command from the vehicle-side controller 34.

As described above, the vehicle-side communication device 38 is configured to be able to communicate with the server 1 using the wide-area wireless communication. In addition, the vehicle-side communication device 38 may be configured to be able to communicate with the ground-side communication device 26 of the ground power supply device 2 by using wide-area wireless communication and narrow-area wireless communication.

### <Flow of power supply operation>

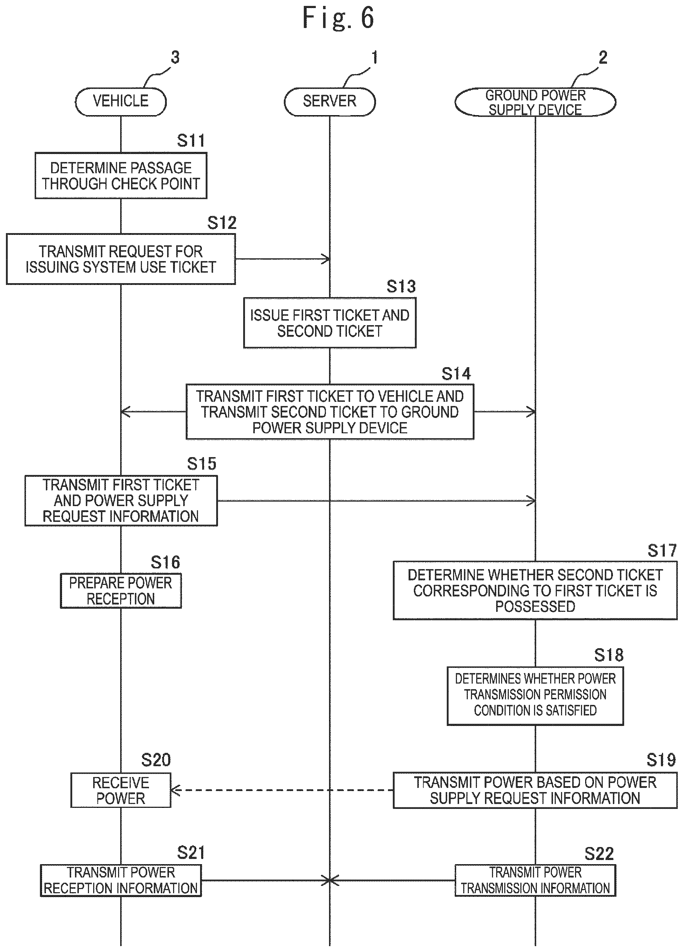

Next, a flow of power supply operation in the wireless power supply system 100 will be described with reference to Fig. 6. Fig. 6 is a sequence diagram schematically illustrating a flow of the power supply operation in the wireless power supply system 100.

The vehicle-side controller 34 of the vehicle 3 determines whether the vehicle 3 has passed through a check point set at a point before the road R in which the power transmission coil 44 of the power transmission device 4 is embedded (or whether the vehicle 3 has approached the check point) (step S11). Regarding whether the vehicle 3 has passed the check point, for example, in a case where a gate is installed at the check point, when the vehicle-side communication device 38 receives a signal generated from the gate, the vehicle-side controller 34 determines that the vehicle 3 has passed the check point. At this time, the vehicle-side controller 34 can receive information related to the check point including position information of the check point and the like from the gate. In a case where the information regarding the check point is included in the storage device 36, the vehicle-side controller 34 determines whether the vehicle 3 has passed the check point based on the current position of the vehicle 3 detected based on the output of the GNSS receiver 35 and the position information of the storage device 36. The method of determining whether the check point has been passed is not limited to the above-described method, and any method can be used.

When it is determined in step S11 that the vehicle 3 has passed the check point, the vehicle-side controller 34 transmits, to the server 1, a request for issuing a system use ticket, which is a virtual ticket for performing wireless power supply, together with identification information of the vehicle 3 and information on the check point that the vehicle 3 has passed (step S12).

Upon receiving the request for issuing the system use ticket from the vehicle 3, the server 1 specifies the vehicle 3 based on the identification information, and issues a first ticket and a second ticket in a case where the vehicle 3 satisfies an arbitrary power supply requirement (step S13). The first ticket is the system use ticket to be transmitted to the vehicle 3 which is an identified issuance request source, and is the system use ticket prepared for each of the vehicles 3 having authority to use the power transmission device 4 corresponding to the check point. On the other hand, the second ticket is a system use ticket to be transmitted to the ground power supply device 2 and is a system use ticket corresponding to the first ticket.

When the system use ticket is issued, the server 1 transmits the first ticket to the vehicle 3 which is the issuance request source of the system use ticket, and transmits the second ticket to the ground power supply device 2 including the power transmission device 4 corresponding to the check point where it is determined in step S11 that the vehicle 3 has passed (step S14).

Upon receiving the first ticket, the vehicle-side controller 34 of the vehicle 3 uses the vehicle-side communication device 38 to periodically and directly transmit a signal including the first ticket to the ground power supply device 2 via the narrow-area wireless communication (step S15). At this time, the vehicle-side controller 34 also transmits a signal including information regarding power supply (for example, a command value such as required supply power or a required supply power amount, and information on the power reception device 5 (for example, the number of turns of the power reception coil 52, a height position in a vertical direction, and the like)). In addition, the vehicle-side controller 34 controls the power reception device 5, particularly the charging circuit 55, such that power can be received when the vehicle 3 travels, parks, or stops on the power transmission coil 44 (step S16).

When the signal transmitted by the vehicle-side communication device 38 of the vehicle 3 is received by the ground-side communication device 26, the ground-side controller 22 determines whether the server 1 has already received the second ticket corresponding to the first ticket included in the received signal (step S17). That is, the ground-side controller 22 determines whether the second ticket corresponding to the first ticket is possessed.

When it is determined in step S17 that the second ticket corresponding to the first ticket is possessed, the ground-side controller 22 determines that the vehicle 3 traveling, parked, or stopped on the power transmission coil 44 is the vehicle 3 for which system use permission has been obtained. In this case, the ground-side controller 22 determines whether a power transmission permission condition is satisfied (step S18). Specifically, the ground-side controller 22 determines whether the lateral deviation occurs between the power transmission coil 44 and the power reception coil 52 based on the output of the ground-side magnetic field sensor 25. Furthermore, the ground-side controller 22 determines whether there is a foreign substance on the road R provided with the power transmission coil 44 based on the output of the foreign substance sensor 24.

When it is determined in step S18 that the power transmission permission condition is satisfied, for example, when it is determined that the lateral deviation does not occur and there is no foreign substance on the road R, the ground-side controller 22 determines that the power transmission from the power transmission coil 44 is possible. In this case, the ground-side controller 22 controls the power transmission device 4 so that power can be transmitted to the vehicle 3 when the vehicle 3 travels, parks, or stops on the power transmission device 4 based on power supply request information transmitted from the vehicle 3 in step S15 (step S19). As a result, when the vehicle 3 travels, parks, or stops on the power transmission device 4, the vehicle 3 receives the power from the power transmission device 4 (step S20).

Thereafter, when the power transmission from the power transmission device 4 to the power reception device 5 is completed, the vehicle-side controller 34 of the vehicle 3 calculates a received average power and a received power amount based on the output of the vehicle-side sensor 37 and the like, and transmits the calculation results to the server 1 (step S21). On the other hand, the ground-side controller 22 of the ground power supply device 2 calculates a transmission average power and a transmission power amount based on the output of the ground-side circuit sensor 23 and the like, and transmits the calculation results to the server 1 (step S22).

### <Diagnosis of abnormality>

An abnormality may occur in the ground power supply device 2 of the wireless power supply system 100 configured as described above. Various abnormalities may occur in the ground power supply device 2. Specifically, for example, it is conceivable that a suitable magnetic field is not generated due to a short circuit or the like even if the power is supplied to the power transmission-side resonance circuit 43, and the lateral deviation is not suitable detected due to a failure of the ground-side magnetic field sensor 25. Therefore, abnormality diagnosis for diagnosing such an abnormality occurring in the ground power supply device 2 is required.

Thus, in the present embodiment, the abnormality diagnosis for diagnosing an abnormality of the ground power supply device 2 is performed. In particular, in the present embodiment, the abnormality diagnosis is performed when a diagnosis vehicle 71 that performs the abnormality diagnosis of the ground power supply device 2 is traveling and passes over the power transmission device 4 of the ground power supply device 2 to be inspected, particularly over the power transmission coil 44.

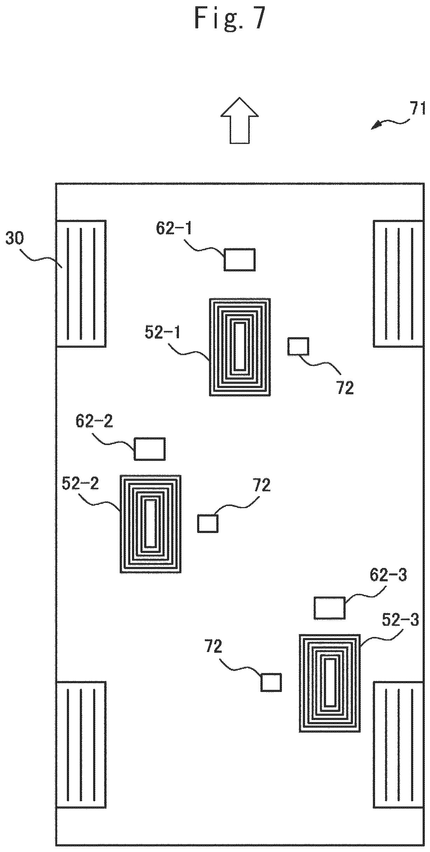

Fig. 7 is a bottom view schematically illustrating a bottom surface of the diagnosis vehicle 71. The configuration of the diagnosis vehicle 71 is basically similar to the configuration of the general vehicle 3 described above. Hereinafter, portions of the configuration of the diagnosis vehicle 71 different from those of the general vehicle 3 will be mainly described. In the present embodiment, the diagnosis vehicle 71 mainly performs abnormality diagnosis of the ground power supply device 2 by the power reception device 5 and the vehicle-side controller 34. Therefore, the power reception device 5 and the vehicle-side controller 34 constitute an abnormality diagnosis device that diagnoses an abnormality of the ground power supply device 2, and the diagnosis vehicle 71 includes the abnormality diagnosis device.

As illustrated in Fig. 7, the diagnosis vehicle 71 according to the present embodiment includes a plurality of power reception coils 52. More specifically, the diagnosis vehicle 71 includes a plurality of power reception-side resonance circuits 51 each having one power reception coil 52. The plurality of power reception coils 52, that is, the plurality of power reception-side resonance circuits 51, are arranged in the diagnosis vehicle 71 in a state of being laterally shifted from each other. In addition, the plurality of power reception coils 52 are arranged in the diagnosis vehicle 71 so as to be spaced apart from each other in the traveling direction of the diagnosis vehicle 71.

In the example illustrated in Fig. 7, the diagnosis vehicle 71 includes three power reception coils 52 including a first power reception coil 52-1, a second power reception coil 52-2, and a third power reception coil 52-3. The first power reception coil 52-1 is disposed at the center in the lateral direction in front of the diagnosis vehicle 71. Therefore, the first power reception coil 52-1 is disposed at the same normal position as the position of the power reception coil 52 of the general vehicle 3 in the lateral direction. The second power reception coil 52-2 is disposed on one side (left side in Fig. 7) with respect to the center in the lateral direction of the diagnosis vehicle 71 at the center in a front-rear direction of the diagnosis vehicle 71. The third power reception coil 52-3 is disposed on a rear side of the diagnosis vehicle 71 and on a side (the right side in Fig. 7) opposite to the one side with respect to the center in the lateral direction of the diagnosis vehicle 71. Therefore, the second power reception coil 52-2 and the third power reception coil 52-3 are arranged at abnormal positions different from the position of the power reception coil 52 of the general vehicle 3 in the lateral direction.

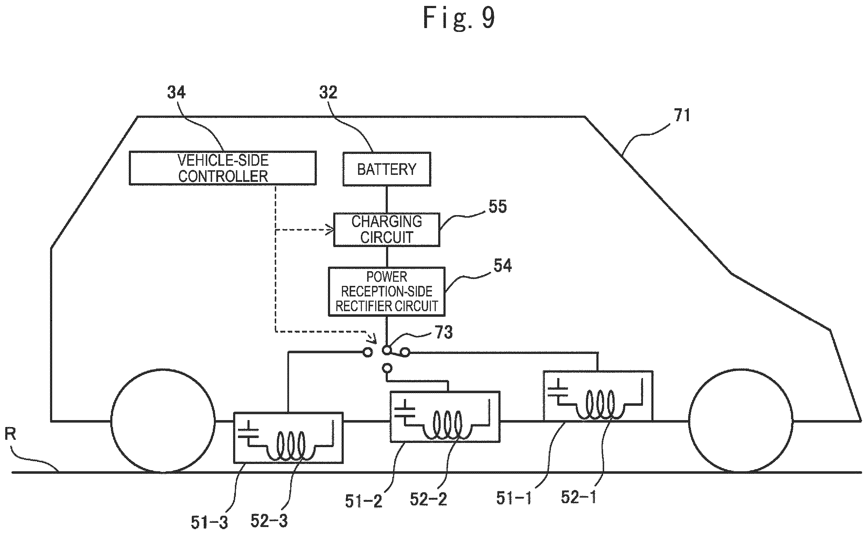

The plurality of power reception-side resonance circuits 51 each including one power reception coil 52 of the diagnosis vehicle 71 are connected to one power reception-side rectifier circuit 54 via a switch 73 (see Fig. 9). The vehicle-side sensor 37 can detect a current flowing through each of the power reception-side resonance circuits 51 and a voltage applied to each of the power reception-side resonance circuits 51. Therefore, the vehicle-side controller 34 can detect the power received by each of the power reception-side resonance circuits 51 based on the output of the vehicle-side sensor 37.

The diagnosis vehicle 71 according to the present embodiment includes a plurality of alternating magnetic field generation circuits 61. The magnetic field generation coils 62 of the plurality of alternating magnetic field generation circuits 61 are provided in the diagnosis vehicle 71 in a state of being shifted from each other in the lateral direction. In the example illustrated in Fig. 7, the first magnetic field generation coil 62-1 is disposed in front of the first power reception coil 52-1, and thus, at the center in the lateral direction of the diagnosis vehicle 71. Therefore, the first magnetic field generation coil 62-1 is disposed at the same normal position as the position of the alternating magnetic field generation circuit 61 of the general vehicle 3. A second magnetic field generation coil 62-2 is disposed in front of the second power reception coil 52-2, and thus, on one side (left side in Fig. 7) with respect to the center in the lateral direction of the diagnosis vehicle 71. A third magnetic field generation coil 62-3 is disposed in front of the third power reception coil 52-3, and thus, on a side (right side in Fig. 7) opposite to the one side with respect to the center in the lateral direction of the diagnosis vehicle 71. Therefore, the second magnetic field generation coil 62-2 and the third magnetic field generation coil 62-3 are arranged at abnormal positions different from the position of the alternating magnetic field generation circuit 61 of the general vehicle 3.

In addition, the diagnosis vehicle 71 according to the present embodiment includes a vehicle-side magnetic field sensor 72. The vehicle-side magnetic field sensor 72 is an example of a detector that detects the surrounding magnetic field intensity, similar to the ground-side magnetic field sensor 25. The vehicle-side magnetic field sensor 72 detects the magnetic field intensity around the power reception coil 52 when power transmission from the power transmission device 4 to the power reception device 5 is being performed. In the present embodiment, as illustrated in Fig. 7, the vehicle-side magnetic field sensors 72 are provided one by one adjacent to each of the power reception coils 52.

The diagnosis vehicle 71 further includes a display device (not illustrated) that displays the result of the abnormality diagnosis of the ground power supply device 2. The display device is electrically connected to the vehicle-side controller 34, and displays the result of the abnormality diagnosis in accordance with a command from the vehicle-side controller 34.

In the present embodiment, when the diagnosis vehicle 71 configured as described above passes over the power transmission coil 44 of the ground power supply device 2, the power supply operation by the ground power supply device 2 as illustrated in Fig. 6 is performed similarly to the case where the general vehicle 3 passes. Therefore, the first ticket and the power supply request information are transmitted from the diagnosis vehicle 71 to the ground power supply device 2 (step S15 in Fig. 6). Then, when the ground-side controller 22 determines that the second ticket corresponding to the first ticket is possessed and determines that the power transmission permission condition is satisfied, the ground-side controller 22 controls the power transmission device 4 so that the power can be transmitted to the diagnosis vehicle 71 (step S19 in Fig. 6).

When the diagnosis vehicle 71 configured as described above passes over the power transmission coil 44, the plurality of power reception coils 52 of the diagnosis vehicle 71 sequentially pass over the power transmission coil 44. The power reception coils 52 of the diagnosis vehicle 71 are arranged to be shifted from each other in the lateral direction. Therefore, every time each of the power reception coils 52 of the diagnosis vehicle 71 is located at the power transmission coil 44, the power supply operation is performed under different power supply conditions (conditions where relative positions of the power transmission coil 44 and the power reception coil 52 in the lateral direction are different from each other). Therefore, in the present embodiment, when the diagnosis vehicle 71 passes over the power transmission coil 44, the power reception coil 52 is sequentially located on the power transmission coil 44, whereby the power supply operation is performed under the power supply conditions different from each other. In other words, in the present embodiment, the plurality of power reception coils 52 is configured to be able to receive power under a plurality of different power supply conditions for each of the power reception coils 52. That is, the power reception device 5 is configured such that the power supply operation is performed under a plurality of different power supply conditions.

In particular, in the present embodiment, since the first power reception coil 52-1 is disposed at a normal position, the power supply operation is performed in the first power reception coil 52-1 under the power supply condition in which the power supply operation is performed normally. On the other hand, since the second power reception coil 52-2 and the third power reception coil 52-3 are arranged at abnormal positions, the power supply operation is performed in the second power reception coil 52-2 and the third power reception coil 52-3 under the power supply condition in which an abnormality occurs in the power supply.

In the present embodiment, the abnormality diagnosis of the ground power supply device 2 is performed based on a value of a parameter related to the power supply detected while the power supply operation is performed under the plurality of different power supply conditions as described above. In particular, in the present embodiment, the vehicle-side controller 34 performs the abnormality diagnosis of the ground power supply device 2 based on the value of the parameter related to the power supply. Therefore, the vehicle-side controller 34 functions as a diagnosis unit that diagnoses an abnormality of the ground power supply device 2 based on the value of the parameter.

In the example illustrated in Fig. 7, when the diagnosis vehicle 71 advances toward the power transmission coil 44 of the ground power supply device 2, first, the first magnetic field generation coil 62-1 reaches the ground-side magnetic field sensor 25. Therefore, the ground-side controller 22 detects the presence or absence of lateral deviation based on the alternating magnetic field generated by the first magnetic field generation coil 62-1 based on the output of the ground-side magnetic field sensor 25. Then, when the ground-side controller 22 determines that the lateral deviation does not occur and the power transmission permission condition is satisfied, power transmission from the power transmission coil 44 to the power reception coil 52 is performed. Thereafter, when the power transmission ends, the vehicle-side controller 34 calculates the received average power and the received power amount during the power transmission.

Since the first magnetic field generation coil 62-1 and the first power reception coil 52-1 are arranged at normal positions, the power supply operation is performed on these coils under the power supply condition in which the power supply operation is performed normally. Therefore, when the ground-side magnetic field sensor 25 operates normally, it is detected that there is no lateral deviation in the ground power supply device 2, and the power is transmitted from the power transmission coil 44. When the power transmission device 4 including the power transmission coil 44 operates normally, the received average power and the received power amount during the power transmission are values within a preset normal range corresponding to the power supply condition. Therefore, as a result of the power supply operation, when the power transmission from the power transmission coil 44 is not performed, or when the received average power or the received power amount during power transmission is a value outside the normal range although the power is transmitted from the power transmission coil 44, it is determined that an abnormality has occurred in the ground-side magnetic field sensor 25 or the power transmission device 4.

Thereafter, when the diagnosis vehicle 71 advances, the second power reception coil 52-2 and the third power reception coil 52-3 reach the ground-side magnetic field sensor 25, and the presence or absence of the lateral deviation is detected based on the alternating magnetic field generated by the second magnetic field generation coil 62-2 and the third magnetic field generation coil 62-3. In addition, when the power is transmitted from the power transmission coil 44 to the second power reception coil 52-2 and the third power reception coil 52-3, the received average power or the received power amount during power transmission is calculated.

Since the second magnetic field generation coil 62-2, the third magnetic field generation coil 62-3, the second power reception coil 52-2, and the third power reception coil 52-3 are not arranged at normal positions, the power supply operation is performed on these coils under the power supply condition in which an abnormality occurs in the power supply. Therefore, when the ground-side magnetic field sensor 25 operates normally, it is detected that there is the lateral deviation in the ground power supply device 2, and no power is transmitted from the power transmission coil 44. In a case where the power is temporarily transmitted from the power transmission coil 44, when the power transmission device 4 including the power transmission coil 44 operates normally, the received average power and the received power amount during the power transmission are values within a preset normal range corresponding to the power supply condition (a range lower than the normal range corresponding to the power supply condition in which the power supply operation is performed normally). Therefore, when the power is transmitted from the power transmission coil 44 as a result of the power supply operation, it is determined that an abnormality has occurred in the ground-side magnetic field sensor 25. Furthermore, as a result of the power supply operation, the power is transmitted from the power transmission coil 44, and when the received average power or the received power amount during power transmission is the value outside the normal range, it is determined that an abnormality has occurred in the power transmission device 4.

Then, as a result of the passage of the first power reception coil 52-1 to the third power reception coil 52-3 through the power transmission coil 44, when it is not determined that an abnormality has occurred in both the ground-side magnetic field sensor 25 and the power transmission device 4, it is determined that both the ground-side magnetic field sensor 25 and the power transmission device 4 are normal. Therefore, when the presence or absence of the power transmission by the power transmission coil 44 corresponds to the power supply condition (for example, in the case of the power supply condition that the lateral deviation does not occur, the power is transmitted by the power transmission coil 44), it is determined that an abnormality does not occur in the ground-side magnetic field sensor 25. When it is determined that the received average power or the received power amount during power transmission is a value within the normal range corresponding to the power supply condition, it is determined that no abnormality has occurred in the power transmission device 4.

According to the present embodiment, the abnormality of the ground-side magnetic field sensor 25 of the ground power supply device 2 and the power transmission device 4 is diagnosed based on the value (specifically, for example, the presence or absence of the power transmission by the power transmission coil 44, and the received average power or the received power amount during power transmission) of the parameter related to the power supply detected while the power supply operation is performed under a plurality of different power supply conditions. Therefore, it is possible to detect the abnormality with high accuracy as compared with a case where the abnormality diagnosis is performed based on the detection result while the power supply operation is performed under only one power supply condition.

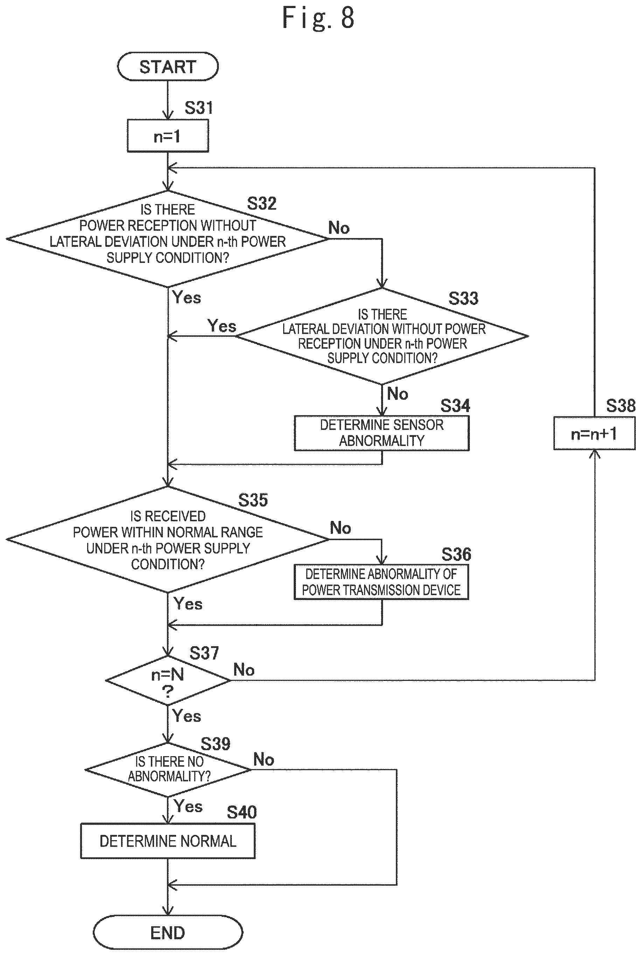

Fig. 8 is a flowchart illustrating a flow of an abnormality diagnosis process performed in the vehicle-side controller 34. The illustrated abnormality diagnosis process is executed every time the diagnosis vehicle 71 passes through one power transmission coil 44.

As illustrated in Fig. 8, first, the vehicle-side controller 34 sets a counter n to 1 (step S31). Next, the vehicle-side controller 34 determines whether there is no lateral deviation in the magnetic field generation coil 62 and there is power reception by the power reception coil 52 under the n-th power supply condition (in the present embodiment, the first power supply condition is a power supply condition using the first magnetic field generation coil 62-1 and the first power reception coil 52-1) (step S32). In addition, the vehicle-side controller 34 determines whether there is the lateral deviation in the magnetic field generation coil 62 and there is no power reception by the power reception coil 52 under the n-th power supply condition (step S33). When it is determined in steps S32 and S33 that there is no lateral deviation in the magnetic field generation coil 62 and there is no power reception by the power reception coil 52, and when it is determined that there is the lateral deviation in the magnetic field generation coil 62 and there is power reception by the power reception coil 52, the vehicle-side controller 34 determines that the ground-side magnetic field sensor 25 has an abnormality (step S34).

Next, under the n-th power supply condition, the vehicle-side controller 34 determines whether the received average power or the received power amount during power transmission is within the normal range corresponding to the n-th power supply condition (step S35). When it is determined that the received average power or the received power amount is not within the normal range corresponding to the n-th power supply condition, the vehicle-side controller 34 determines that an abnormality has occurred in the power transmission device 4 (step S36).

Next, the vehicle-side controller 34 determines whether the counter n has reached the number N of power supply conditions (3 in the present embodiment) prepared in the diagnosis vehicle 71 (step S37). In a case where it is determined that the counter n has not reached the number N of power supply conditions, a value obtained by adding 1 to n is set as a new n (step S38), and steps S32 to S36 are repeated. On the other hand, when it is determined in step S37 that the counter n has reached the number N of power supply conditions, the vehicle-side controller 34 determines whether there has been no abnormality determination of the ground-side magnetic field sensor 25 in step S34 or no abnormality determination of the power transmission device 4 in step S36 so far (step S39). When it is determined in step S39 that there has been no abnormality determination so far, the vehicle-side controller 34 determines that both the ground-side magnetic field sensor 25 and the power transmission device 4 are normal.

### <Modified example>

In the above embodiment, the diagnosis vehicle 71 includes the plurality of power reception coils 52 and a plurality of the magnetic field generation coils 62. However, the diagnosis vehicle 71 may include only one power reception coil 52 movable in the lateral direction and only one magnetic field generation coil 62 movable in the lateral direction. In this case, the diagnosis vehicle 71 stops on each of the power transmission coils 44, and moves the power reception coil 52 and the magnetic field generation coil 62 to a plurality of different positions while stopping when located on each of the power transmission coils 44. As a result, the power supply operation is performed when the power reception coil 52 and the magnetic field generation coil 62 are at the respective positions. As a result, the power supply operation is performed under a plurality of different power supply conditions.

In the above embodiment, after the power supply operation, the abnormality diagnosis of the power transmission device 4 is performed based on the received average power or the received power amount calculated in the vehicle-side controller 34. However, the abnormality diagnosis of the power transmission device 4 may be performed based on the magnetic field intensity detected by the vehicle-side magnetic field sensor 72 during the power supply operation. In this case, when the magnetic field intensity detected by the vehicle-side magnetic field sensor 72 during the power supply operation is within the normal range corresponding to the power supply condition, it is determined that the power transmission device 4 is normal. On the other hand, when the magnetic field intensity detected by the vehicle-side magnetic field sensor 72 during the power supply operation is out of the normal range corresponding to the power supply condition, it is determined that an abnormality has occurred in the power transmission device 4.

In the above embodiment, the first power reception coil 52-1 is disposed at a normal position, and the second power reception coil 52-2 and the third power reception coil 52-3 are arranged at abnormal positions. However, all the power reception coils 52 may be arranged at normal positions (positions laterally shifted from each other to an allowable extent as normal positions). Similarly, all the power reception coils 52 may be arranged at abnormal positions. Alternatively, the plurality of power reception coils 52 may be arranged at normal positions, and the remaining plurality of power reception coils 52 may be arranged at abnormal positions.

### Second Embodiment

Next, a method for diagnosing an abnormality of a ground power supply device 2 according to the second embodiment will be described with reference to Fig. 9. The abnormality diagnosis method of the ground power supply device 2 according to the second embodiment is basically similar to the diagnosis method according to the first embodiment. Hereinafter, portions different from those of the first embodiment will be mainly described.

Fig. 9 is a diagram schematically illustrating a configuration of a diagnosis vehicle 71 according to the second embodiment. As illustrated in Fig. 9, also in the present embodiment, the diagnosis vehicle 71 includes a plurality of power reception coils 52. More specifically, the diagnosis vehicle 71 includes a plurality of power reception-side resonance circuits 51 each having one power reception coil 52. The plurality of power reception coils 52 are arranged in the diagnosis vehicle 71 in a state of being shifted from each other in a vertical direction (a direction perpendicular to the ground on which the diagnosis vehicle 71 travels). The plurality of power reception coils 52 are arranged in the diagnosis vehicle 71 at the center in the lateral direction so as to be spaced apart from each other in the traveling direction of the diagnosis vehicle 71.

In the example illustrated in Fig. 9, the diagnosis vehicle 71 includes three power reception coils 52 including a first power reception coil 52-1, a second power reception coil 52-2, and a third power reception coil 52-3. The first power reception coil 52-1 is disposed at a position far from a road R with respect to a position in the general vehicle 3 in front of the diagnosis vehicle 71. The second power reception coil 52-2 is disposed at the same normal position as the position in the general vehicle 3 at the center in the front-rear direction of the diagnosis vehicle 71. The third power reception coil 52-3 is disposed behind the diagnosis vehicle 71 at a position closer to the road R with respect to the position in the general vehicle 3. Therefore, the first power reception coil 52-1 and the third power reception coil 52-3 are arranged at abnormal positions different from the position of the power reception coil 52 of the general vehicle 3 in the vertical direction.

In the present embodiment, when the diagnosis vehicle 71 configured as described above passes over the power transmission coil 44 of the ground power supply device 2, the power supply operation by the ground power supply device 2 as illustrated in Fig. 6 is performed similarly to the case where the general vehicle 3 passes. When the diagnosis vehicle 71 passes over the power transmission coil 44, the plurality of power reception coils 52 of the diagnosis vehicle 71 sequentially pass over the power transmission coil 44. The power reception coils 52 of the diagnosis vehicle 71 are arranged to be shifted from each other in the vertical direction. Therefore, every time each of the power reception coils 52 of the diagnosis vehicle 71 is located on the power transmission coil 44, the power supply operation is performed under different power supply conditions (conditions where relative positions of the power transmission coil 44 and the power reception coil 52 in the vertical direction are different from each other). Therefore, also in the present embodiment, when the diagnosis vehicle 71 passes over the power transmission coil 44, the power reception coil 52 is sequentially located on the power transmission coil 44, whereby the power supply operation is performed under the power supply conditions different from each other.

Also in the present embodiment, the abnormality diagnosis of the ground power supply device 2 is performed based on whether the received average power or the received power amount calculated by the vehicle-side controller 34 when the power supply operation is performed under the power supply conditions different from each other is within the normal range corresponding to the power supply condition.

Also in the present embodiment, the diagnosis vehicle 71 may have only one power reception coil 52 movable in the vertical direction. In this case, the diagnosis vehicle 71 stops on each of the power transmission coils 44, and moves the power reception coil 52 to a plurality of different positions while stopping when located on each of the power transmission coils 44. The present embodiment may be combined with the first embodiment, and the diagnosis vehicle 71 may include the plurality of power reception coils 52 and magnetic field generation coils 62 which are shifted in the lateral direction and the vertical direction.

### Third Embodiment

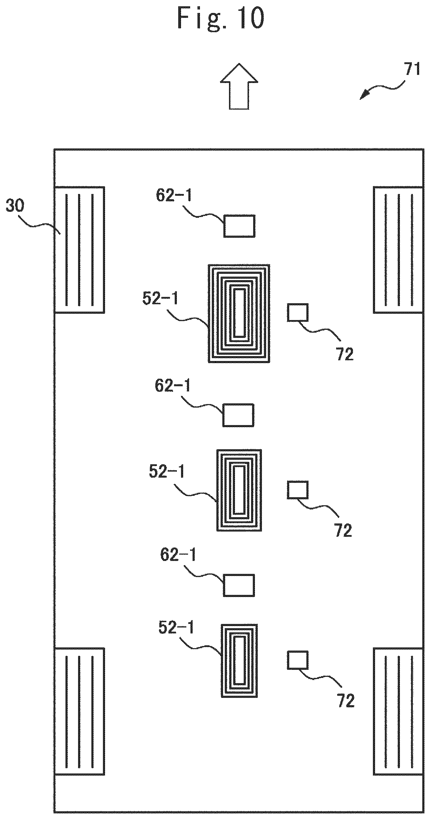

Next, a method for diagnosing an abnormality of a ground power supply device 2 according to the third embodiment will be described with reference to Fig. 10. The abnormality diagnosis method of the ground power supply device 2 according to the third embodiment is basically similar to the diagnosis method according to the first and second embodiments. Hereinafter, portions different from those of the first and second embodiments will be mainly described.

Fig. 10 is a bottom view similar to Fig. 7 schematically illustrating a bottom surface of a diagnosis vehicle 71. As illustrated in Fig. 10, the diagnosis vehicle 71 according to the present embodiment includes a plurality of power reception coils 52. More specifically, the diagnosis vehicle 71 includes a plurality of power reception-side resonance circuits 51 each having one power reception coil 52. The plurality of power reception-side resonance circuits 51 have different parameters related to resonance. Specifically, in the present embodiment, the plurality of power reception coils 52 have different numbers of turns. The plurality of power reception coils 52 are arranged in the diagnosis vehicle 71 at the center in the lateral direction so as to be spaced apart from each other in the traveling direction of the diagnosis vehicle 71.

In the example illustrated in Fig. 10, the diagnosis vehicle 71 includes three power reception coils 52 including a first power reception coil 52-1, a second power reception coil 52-2, and a third power reception coil 52-3. The first power reception coil 52-1 is disposed in front of the diagnosis vehicle 71 and has a larger number of turns than the number of turns in the general vehicle 3. The second power reception coil 52-2 is disposed at the center in the front-rear direction of the diagnosis vehicle 71, and has the same normal number of turns as the number of turns in the general vehicle 3. The third power reception coil 52-3 is disposed behind the diagnosis vehicle 71 and has a smaller number of turns than the number of turns in the general vehicle 3. Therefore, the first power reception coil 52-1 and the third power reception coil 52-3 have an abnormal number of turns different from the number of turns in the general vehicle 3.

In the present embodiment, when the diagnosis vehicle 71 configured as described above passes over the power transmission coil 44 of the ground power supply device 2, the power supply operation by the ground power supply device 2 as illustrated in Fig. 6 is performed similarly to the case where the general vehicle 3 passes. When the diagnosis vehicle 71 passes over the power transmission coil 44, the plurality of power reception coils 52 of the diagnosis vehicle 71 sequentially pass over the power transmission coil 44. The power reception coils 52 of the diagnosis vehicle 71 are configured such that the numbers of turns are shifted from each other. Therefore, every time each of the power reception coils 52 of the diagnosis vehicle 71 is located on the power transmission coil 44, the power supply operation is performed under different power supply conditions. Therefore, also in the present embodiment, when the diagnosis vehicle 71 passes over the power transmission coil 44, the power reception coil 52 is sequentially located on the power transmission coil 44, whereby the power supply operation is performed under the power supply conditions different from each other.

Also in the present embodiment, the abnormality diagnosis of the ground power supply device 2 is performed based on whether the received average power or the received power amount calculated by the vehicle-side controller 34 when the power supply operation is performed under the power supply conditions different from each other is within the normal range corresponding to the power supply condition.

In the present embodiment, the number of turns of the power reception coil 52 among the parameters related to the resonance of the plurality of power reception-side resonance circuits 51 is different from each other. However, in the plurality of power reception-side resonance circuits 51, values of parameters related to resonance other than the number of turns of the power reception coil 52 may be different from each other. Specifically, examples of such parameters include the outer diameter and the inner diameter of the power transmission coil 44 and the electrostatic capacitance of a power transmission-side capacitor 45. The present embodiment may be combined with the first embodiment and the second embodiment, and for example, the diagnosis vehicle 71 may include the plurality of power reception coils 52 having different numbers of turns and shifted in the lateral direction and the vertical direction.

### Fourth Embodiment

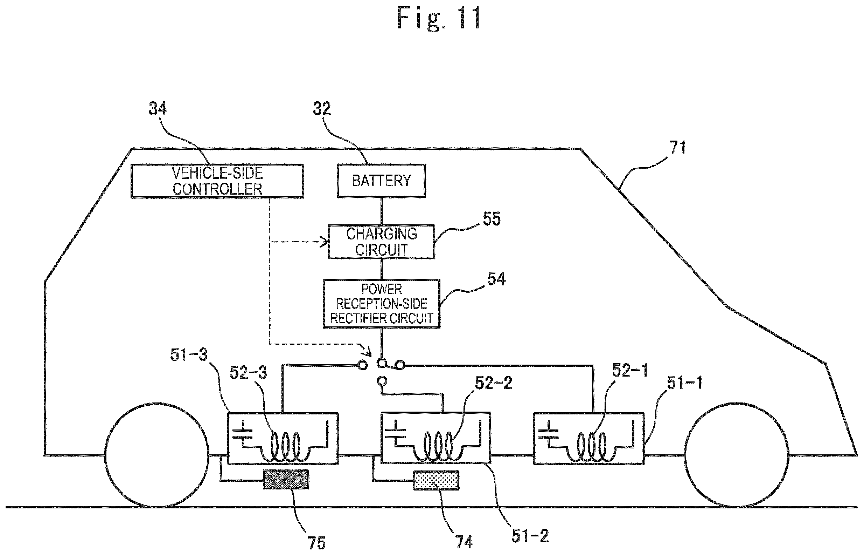

Next, a method for diagnosing an abnormality of a ground power supply device 2 according to the fourth embodiment will be described with reference to Fig. 11. The abnormality diagnosis method of the ground power supply device 2 according to the fourth embodiment is basically similar to the diagnosis method according to the first to third embodiments. Hereinafter, portions different from those of the first to third embodiments will be mainly described.

Fig. 11 is a diagram schematically illustrating a configuration of a diagnosis vehicle 71 according to the fourth embodiment. As illustrated in Fig. 11, also in the present embodiment, the diagnosis vehicle 71 includes a plurality of power reception coils 52. In the present embodiment, the plurality of power reception coils 52 are arranged at the center in the lateral direction so as to be spaced apart from each other in the traveling direction of the diagnosis vehicle 71. All the power reception-side resonance circuits 51 including all the power reception coils 52 are configured to be the same except for the position in the traveling direction of the diagnosis vehicle 71.

In addition, in the diagnosis vehicle 71 according to the present embodiment, foreign substance simulation objects 74 and 75 that simulate foreign substances that can be located on the road R are arranged below some of the power reception coils 52. In the example illustrated in Fig. 11, no foreign substance simulation object is disposed under the first power reception coil 52-1 disposed in front of the diagnosis vehicle 71. On the other hand, the foreign substance simulation object 74 that simulates a biological object is disposed below the second power reception coil 52-2 disposed at the center in the front-rear direction of the diagnosis vehicle 71. In addition, the metal foreign substance simulation object 75 is disposed below the third power reception coil 52-3 disposed behind the diagnosis vehicle 71. These foreign substance simulation objects 74 and 75 are attached to the diagnosis vehicle 71 and thus move with the diagnosis vehicle 71.

When the diagnosis vehicle 71 configured as described above passes over the power transmission coil 44 of the ground power supply device 2, the plurality of power reception coils 52 of the diagnosis vehicle 71 sequentially pass over the power transmission coil 44. In particular, when the second power reception coil 52-2 and the third power reception coil 52-3 pass over the power transmission coil 44, the power supply operation is performed in a state where the foreign substance simulation objects 74 and 75 different from each other are located between the power reception coil 52 and the power transmission coil 44. On the other hand, when the first power reception coil 52-1 passes over the power transmission coil 44, the power supply operation is performed in a state where the foreign substance simulation object is not located between the power reception coil 52 and the power transmission coil 44. That is, in the present embodiment, the power supply operation is performed under power supply conditions different from each other, that is, the power supply condition in which the foreign substance simulation objects 74 and 75 are arranged between the diagnosis vehicle 71 and the ground power supply device 2, and the power supply condition in which the foreign substance simulation objects 74 and 75 are not arranged between the diagnosis vehicle 71 and the ground power supply device 2.

In particular, in the present embodiment, the foreign substance simulation objects 74 and 75 are arranged below the second power reception coil 52-2 and the third power reception coil 52-3. Therefore, when the second power reception coil 52-2 and the third power reception coil 52-3 pass over the power transmission coil 44, when the foreign substance sensor 24 operates normally, the foreign substance is detected, and the power transmission from the power transmission coil 44 is not performed. In a case where the power is temporarily transmitted from the power transmission coil 44, when the power transmission device 4 including the power transmission coil 44 operates normally, the received average power and the received power amount during the power transmission are values within a preset normal range corresponding to the power supply condition (a range different from the normal range corresponding to the power supply condition in which the power supply operation is performed normally). Therefore, when the power is transmitted from the power transmission coil 44 to the second power reception coil 52-2 and the third power reception coil 52-3 as a result of the power supply operation, it is determined that an abnormality has occurred in the foreign substance sensor 24. Furthermore, as a result of the power supply operation, the power is transmitted from the power transmission coil 44, and when the received average power or the received power amount during power transmission is the value outside the normal range, it is determined that an abnormality has occurred in the power transmission device 4.

The diagnosis vehicle 71 may be configured to include only one power reception coil 52 and to be able to alternately arrange different foreign substance simulation objects below the power reception coil 52. The present embodiment may be combined with the first to third embodiments, and for example, the diagnosis vehicle 71 may include the plurality of power reception coils 52 having different numbers of turns and shifted in the lateral direction and the vertical direction and a foreign substance simulation object disposed below some of the power reception coils 52.

### Fifth Embodiment

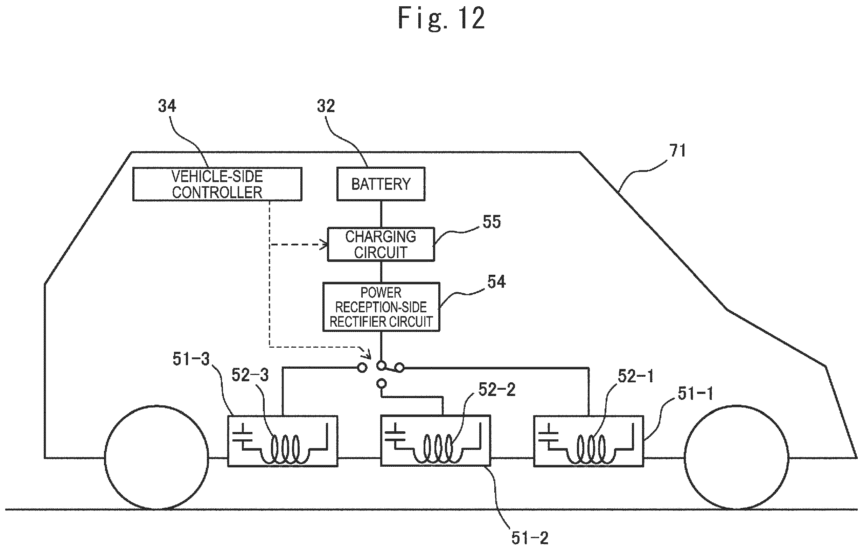

Next, a method for diagnosing an abnormality of a ground power supply device 2 according to the fifth embodiment will be described with reference to Fig. 12. The abnormality diagnosis method of the ground power supply device 2 according to the fifth embodiment is basically similar to the diagnosis method according to the first to fourth embodiments. Hereinafter, portions different from those of the first to fourth embodiments will be mainly described.

Fig. 12 is a diagram schematically illustrating a configuration of a diagnosis vehicle 71 according to the fifth embodiment. As illustrated in Fig. 12, also in the present embodiment, the diagnosis vehicle 71 includes a plurality of power reception coils 52. In the present embodiment, the plurality of power reception coils 52 are arranged at the center in the lateral direction so as to be spaced apart from each other in the traveling direction of the diagnosis vehicle 71. All the power reception-side resonance circuits 51 including all the power reception coils 52 are configured to be the same except for the position in the traveling direction of the diagnosis vehicle 71.

In addition, in the present embodiment, when transmitting a signal including the first ticket and the information on power supply to the ground power supply device 2 (step S15 in Fig. 6), the vehicle-side controller 34 of the diagnosis vehicle 71 transmits a signal including a different command value for each of the power reception-side resonance circuits 51 including each of the power reception coils 52. Specifically, for example, the vehicle-side controller 34 transmits a signal including a different required supply power to each of the power reception-side resonance circuits 51.

As described above, by transmitting the signal including a different required supply power to each of the power reception-side resonance circuits 51, when the diagnosis vehicle 71 passes over the power transmission coil 44 of the ground power supply device 2, a different power is transmitted from the power transmission coil 44 for each of the power reception coils 52. Therefore, every time each of the power reception coils 52 of the diagnosis vehicle 71 is located on the power transmission coil 44, the power supply operation is performed under different power supply conditions. That is, in the present embodiment, different command values related to power supply are transmitted from the diagnosis vehicle 71 to the ground power supply device 2, so that the power supply operation is performed under the power supply conditions different from each other when the diagnosis vehicle 71 passes over the power transmission coil 44. In other words, in the present embodiment, the vehicle-side controller 34 constituting the abnormality diagnosis device transmits a signal to the ground power supply device 2 so that the power supply operation is performed under a different power supply condition.

Also in the present embodiment, the abnormality diagnosis of the ground power supply device 2 is performed based on whether the received average power or the received power amount calculated by the vehicle-side controller 34 when the power supply operation is performed under the power supply conditions different from each other is within the normal range corresponding to the power supply condition.

In the above embodiment, the diagnosis vehicle 71 includes the three power reception-side resonance circuits 51, and transmits a signal including a different command value for each of the power reception-side resonance circuits 51. However, the diagnosis vehicle 71 may have one power reception-side resonance circuit 51. In this case, the diagnosis vehicle 71 stops on the target power transmission coil 44 and changes the command value a plurality of times while the power supply operation is performed. Also in this case, every time the command value is changed, the power supply operation is performed under different power supply conditions. The present embodiment may be combined with the first to fourth embodiments, and for example, the diagnosis vehicle 71 may include the plurality of power reception coils 52 having different numbers of turns and shifted in the lateral direction and the vertical direction and transmit a signal including a different command value for each of the power reception-side resonance circuits 51 to the ground power supply device 2.

### Sixth Embodiment

Next, a method for diagnosing an abnormality of a ground power supply device 2 according to a sixth embodiment will be described. The abnormality diagnosis method of the ground power supply device 2 according to the sixth embodiment is basically similar to the diagnosis method according to the first to fifth embodiments. Hereinafter, portions different from those of the first to fifth embodiments will be mainly described.

In the present embodiment, the diagnosis vehicle 71 has the same configuration as the diagnosis vehicle 71 according to the fifth embodiment. Therefore, in the diagnosis vehicle 71, a plurality of power reception coils 52 are arranged at the center in the lateral direction so as to be spaced apart from each other in the traveling direction of the diagnosis vehicle 71.

In addition, in the present embodiment, when transmitting a signal including a first ticket to the ground power supply device 2 (step S15 in Fig. 6), a vehicle-side controller 34 of the diagnosis vehicle 71 transmits a different first ticket for each power reception-side resonance circuit 51. Specifically, for example, the vehicle-side controller 34 of the diagnosis vehicle 71 transmits a normal first ticket for a first power reception-side resonance circuit 51-1, and transmits an abnormal first ticket (for example, a first ticket having an expired expiration date, a first ticket that does not correspond to a second ticket, or the like) for a second power reception-side resonance circuit 51-2 and a third power reception-side resonance circuit 51-3.

As described above, by transmitting the signal including the different first ticket for each of the power reception-side resonance circuits 51, when the diagnosis vehicle 71 passes through the power transmission coil 44 of the ground power supply device 2, the power is transmitted from the power transmission coil 44 while corresponding to the first ticket. That is, in the present embodiment, the first tickets different from each other are transmitted from the diagnosis vehicle 71 to the ground power supply device 2, so that the power supply operation is performed under the power supply conditions different from each other when the diagnosis vehicle 71 passes over the power transmission coil 44.

Also in the present embodiment, the abnormality diagnosis of the ground power supply device 2 is performed based on whether the power supply operation corresponding to the transmitted first ticket is performed when the power supply operation is performed under the power supply conditions different from each other. For example, when the power is received in the first power reception-side resonance circuit 51-1 corresponding to the normal first ticket, it is determined that the ground power supply device 2 is normal. On the other hand, when the power is not received in the first power reception-side resonance circuit 51-1 corresponding to the normal first ticket, it is determined that the ground power supply device 2 is abnormal. When the power is received in the second power reception-side resonance circuit 51-2 and the third power reception-side resonance circuit 51-3 corresponding to the abnormal first ticket, it is determined that the ground power supply device 2 is abnormal. On the other hand, when the power is not received in the second power reception-side resonance circuit 51-2 and the third power reception-side resonance circuit 51-3 corresponding to the abnormal first ticket, it is determined that the ground power supply device 2 is normal.

The present embodiment may be combined with the first to fifth embodiments.

Although the preferred embodiments according to the present invention have been described above, the present invention is not limited to these embodiments, and various modifications and changes can be made within the scope of the claims.

## Claims

1. An abnormality diagnosis method for diagnosing an abnormality of a ground power supply device that transmits electrical power to a vehicle in a wireless manner, the abnormality diagnosis method comprising:
performing a power supply operation under a plurality of different power supply conditions when the vehicle is located on a power transmission coil of the ground power supply device; and
diagnosing an abnormality of the ground power supply device based on a value of a parameter related to power supply detected while the power supply operation is performed under the plurality of different power supply conditions.

2. The abnormality diagnosis method according to claim 1, wherein the power supply operation under the plurality of different power supply conditions is performed when the vehicle is traveling and passes over the power transmission coil.

3. The abnormality diagnosis method according to claim 1 or 2, wherein at least one of the plurality of different power supply conditions is a power supply condition in which an abnormality occurs in power supply.

4. The abnormality diagnosis method according to any one of claims 1 to 3, wherein at least one of the plurality of different power supply conditions is a power supply condition in which power supply is performed normally.

5. The abnormality diagnosis method according to any one of claims 1 to 4, wherein
the vehicle includes a plurality of power reception coils capable of receiving electrical power under different power supply conditions,
the power reception coils are arranged in the vehicle so as to be spaced apart from each other in a traveling direction of the vehicle, and
the power supply operation is performed under a different power supply condition for each of the power reception coils by the power reception coil being sequentially located on the power transmission coil when the vehicle passes over the power transmission coil.

6. The abnormality diagnosis method according to any one of claims 1 to 4, wherein
the vehicle includes a power reception coil that can move with respect to the vehicle in such a way that the power supply condition changes, and
the power supply operation is performed under a different power supply condition by the power reception coil moving when the vehicle is located on the power transmission coil.

7. The abnormality diagnosis method according to any one of claims 1 to 6, wherein in the diagnosis of an abnormality of the ground power supply device, it is determined that the ground power supply device is normal when the value of the parameter related to the power supply detected is a value within a normal range corresponding to each power supply condition, and it is determined that an abnormality has occurred in the ground power supply device when the value of the parameter related to the power supply detected is a value outside the normal range corresponding to each power supply condition.

8. The abnormality diagnosis method according to any one of claims 1 to 7, wherein the plurality of different power supply conditions include a plurality of power supply conditions in which positions of power reception coils of the vehicle are shifted from each other in a lateral direction with respect to the traveling direction of the vehicle.

9. The abnormality diagnosis method according to any one of claims 1 to 8, wherein the plurality of different power supply conditions include a plurality of power supply conditions in which positions of power reception coils of the vehicle are shifted from each other in a direction perpendicular to a ground on which the vehicle travels.

10. The abnormality diagnosis method according to any one of claims 1 to 9, wherein the plurality of different power supply conditions include a plurality of power supply conditions in which different command values related to power supply are transmitted from the vehicle to the ground power supply device.

11. The abnormality diagnosis method according to any one of claims 1 to 10, wherein the plurality of different power supply conditions include a power supply condition in which a foreign substance is disposed between the vehicle and the ground power supply device, and a power supply condition in which no foreign substance is disposed between the vehicle and the ground power supply device.

12. An abnormality diagnosis device that diagnoses an abnormality of a ground power supply device that transmits electrical power to a vehicle in a wireless manner, the abnormality diagnosis device comprising:
a power reception device configured to perform a power supply operation under a plurality of different power supply conditions when the vehicle is located on a power transmission coil of the ground power supply device; and
a diagnosis unit that diagnoses an abnormality of the ground power supply device based on a value of a parameter related to power supply detected while the power supply operation is performed under the plurality of different power supply conditions.

13. An abnormality diagnosis device that diagnoses an abnormality of a ground power supply device that transmits electrical power to a vehicle in a wireless manner, the abnormality diagnosis device being configured to:
transmitting a signal to the ground power supply device in such a way that a power supply operation is performed under a plurality of different power supply conditions when the vehicle is located on a power transmission coil of the ground power supply device, and
diagnosing an abnormality of the ground power supply device based on a value of a parameter related to power supply detected while the power supply operation is performed under the plurality of different power supply conditions.

14. The abnormality diagnosis device according to claim 12 or 13, wherein the power supply operation under the plurality of different power supply conditions is performed when the vehicle is traveling and passes over the power transmission coil.

15. A vehicle comprising the abnormality diagnosis device according to any one of claims 12 to 14.
